# EUROPEAN PATENT SPECIFICATION

(11) **EP 2 790 283 B1**
(45) Date of publication and mention of the grant of the patent: **15.06.2016**
(21) Application number: 14162900.6
(22) Date of filing: 31.03.2014
(51) Int. Cl.: H02G 3/18

(54) **Floor box**
Bodenkasten
Boîte de sol

(30) Priority: 12.04.2013 ES 201330449 U
(43) Date of publication of application: 15.10.2014
(73) Proprietor: Unex Aparellaje Electrico S.L., 08903 L'Hospitalet de Llobregat (Barcelona) (ES)
(72) Inventor: Salcedo Suñol, D. Eloi, 08620 Sant Vicenç dels Horts (ES)
(74) Representative: Curell Suñol S.L.P.

(56) References cited:
- EP-A1- 1 923 974
- EP-A1- 2 466 707
- DE-A1-102010 026 553
- US-A1- 2006 060 368
- US-A1- 2010 072 198

## Description

### Field of the invention

The invention relates to a floor box for providing access from above the floor to conductor cables that extend through a floor slab, of the type comprising a tubular body that is suitable for being embedded in the floor slab and which is provided on a lower section thereof with input means for receiving a duct carrying conductor cables, and in a top section thereof a cylindrical span that has its top face open to provide a possible outlet for said conductor cables, said floor box also comprising an annular part that fits inside said cylindrical span, forming a watertight perimeter between the side wall of said annular part and the inner wall of said cylindrical span, said annular part being provided to receive, where appropriate, guiding means for guiding the conductor cables towards a connection device arranged on said floor box, or covering means to cover said floor box at floor level and block in an watertight manner the access to said cylindrical span via said annular part, said annular part comprising on its top face a plurality of blind holes distributed in a circumference around the eye of said annular part and intended to receive screws for attaching to said annular part said guiding means or said covering means.

### State of the art

A floor box according to the preamble of claim 1 developed by the same applicant is described in document ES1064199U. In this previous floor box the covering means, for covering said floor box at floor level and blocking in an watertight manner the access to the cylindrical span of the tubular body via the annular part fitted therein, are made up of a flat, slim cover that is placed on the floor box. The cover is attached to the annular part by means of three screws that are screwed into some of the blind holes distributed in a circumference around the eye of the annular part. This attachment of the cover to the annular part by screws provides the watertight closure of the access to said cylindrical span, via a watertight seal arranged on the top face of said annular part around the eye thereof. For the cover to lie perfectly in line with the floor, and at the same time apply sufficient pressure to said watertight seal when it is attached with screws, it is necessary that the annular part be placed at a precise height in the cylindrical span of the tubular body, which can lead to certain assembling difficulties. On the other hand, the screws with which the cover is attached to the annular part remain visible and accessible at floor level. This implies a negative aesthetical impact, and also implies that said screws are exposed to undesired handling which may affect the watertightness.

### Disclosure of the invention

The aim of the invention is to provide a floor box of the type indicated at the beginning, which can be blocked at floor level by the cover means with greater ease and which is more secure in terms of its watertightness. Another objective of the invention consists in providing a floor box that offers greater possibilities of an aesthetical finish when it is blocked by the cover means.

This purpose is achieved by means of a floor box of the type indicated at the beginning, characterised in that the covering means comprise a bottom cover sized so that it is inserted into the cylindrical span of tubular body and is applied directly on top face of the annular, covering the eye of the latter and forming an watertight perimeter around said eye, said annular part being fitted inside said cylindrical span so that its top face remains sunken in said cylindrical, and a top cover, different from said bottom cover, which is applied on top face of said cylindrical span to cover said floor box at floor level, and attachment means being provided to removably attach said top cover to said bottom cover. Therefore the solution according to the invention consists, essentially, in having separated the covering means into two elements: on the one hand a bottom cover that has the function of blocking in an watertight manner the access to the cylindrical span of the tubular body which is embedded in the floor slab, and on the other hand a top cover to cover said floor box at floor level. As will be seen later on, in the detailed description of a preferred embodiment, this configuration according to the invention allows, on the one hand, arranging the annular part at a less precise height without this neither affecting the levelling of the top cover at floor level nor the pressure applied by the covering means on said annular part, which is essential for guaranteeing appropriate watertightness. Also, as will be seen, this two-cover configuration allows that the screws attaching the covering means are neither visible nor directly accessible.

On the basis of the invention defined in the main claim some preferable embodiments have been envisaged and the characteristics thereof are included in the dependent claims.

Preferably, the top cover is made up of a first body, which is attached to the bottom cover by the attachment means, and which has a central sunken area and a peripheral edge, and a second body that fits in said central sunken area of the first body and which is shaped so that its top face is flat and remains substantially level with said peripheral edge of the first body when the second body is fitted in said central sunken area of the first body. This design offers multiple possibilities for adapting the appearance of the top cover to the type of existing floor in the place where the floor box is installed, and also makes it possible to easily change said appearance by simply replacing the second body.

Preferably, the second body is made up of a plate of floor material, such as for example a piece of floor tile or a resistant part coated with a layer of floor material such as wood, carpet, linoleum, etc.

In some embodiments, the plate of floor material forming the second body is free of attachment means and is maintained by its own weight in the central sunken area of the first body. This solution allows the appearance to be perfectly adapted to the type of flooring, while also simplifying installation.

Alternatively, in other embodiments it is envisaged that the plate of floor material forming the second body is attached to the first body, preferably by gluing.

Preferably, the attachment means, for removably attaching the top cover to the bottom cover, consist of a threaded blind hold in the centre of the top face of said bottom cover and a corresponding screw that extends from the bottom face of the first body. Thanks to said threaded hole being blind, the attachment means do not have any impact on the watertightness conditions between the bottom cover and the annular part. In some embodiments, the screw can pass through a central hole in the first body, so that its head is accessible for screwing through the top face of said first body, with the second body having to be removed for this. In other embodiments, the screw is integral with said first body. This configuration has the advantage that the top cover can be screwed by hand, to attach it to the bottom cover, without having to remove the second body.

Preferably, the peripheral edge of the first body is provided on its inner edge with notches that allow the tip of a screwdriver to be inserted to easily remove the second body from its housing in the first body. In the embodiments wherein the screw is integral with the first body, these notches also allow a specific tool to be used that fits in them to unscrew the top cover without having to remove the second body from its housing in the first body.

The invention also covers other detailed features illustrated in the detailed description of an embodiment of the invention and in the accompanying figures.

### Brief description of the drawings

The advantages and features of the invention can be appreciated from the following description wherein, in a non-limiting manner regarding the scope of the main claim, a preferred embodiment of the invention is described with reference to the figures.
Fig. 1 is an exploded perspective view of the floor box.
Fig. 2 is a partially sectioned side view of the floor box, with the tubular body embedded in the floor and the annular part placed in it, and with the covering means not in place.
Fig. 3 is a similar view to Fig. 2 with the covering means in place.
Fig. 4 is a top perspective view showing the appearance of the floor box with the covering means in place.
Fig. 5 is a partially sectioned side view showing a variant of the first body of the top cover.
Fig. 6 is a partially sectioned side view, similar to Fig. 3, showing the case where the covering means have been replaced by guiding means for guiding some conductor cables towards a connection device arranged on said floor box.

### Detailed description of an embodiment of the invention

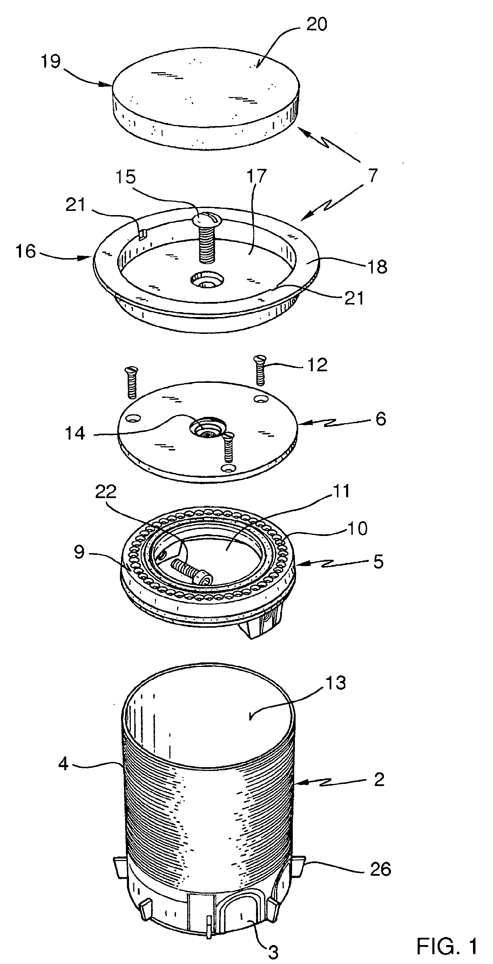

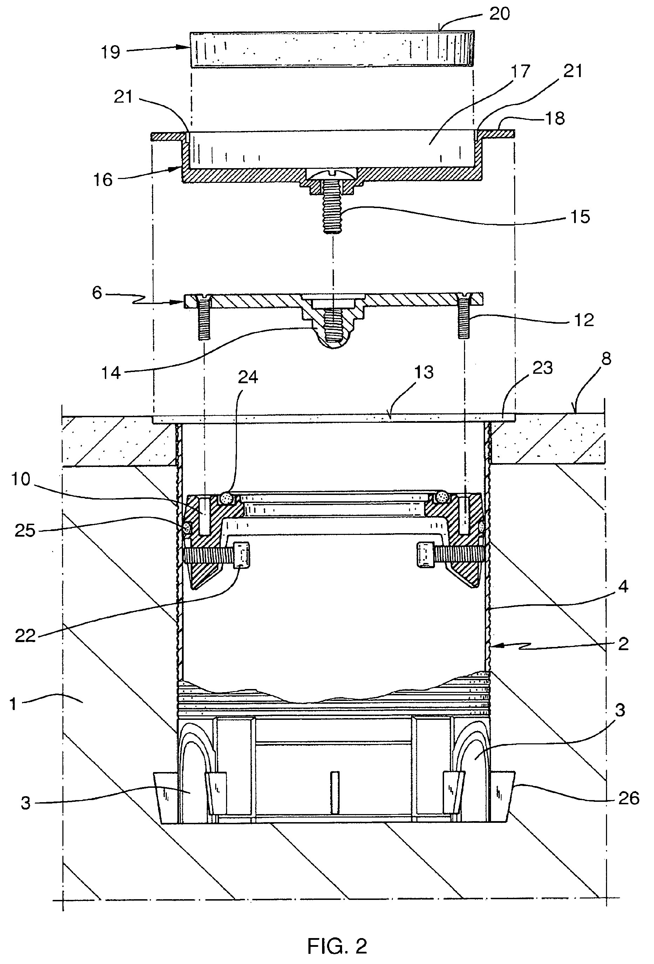

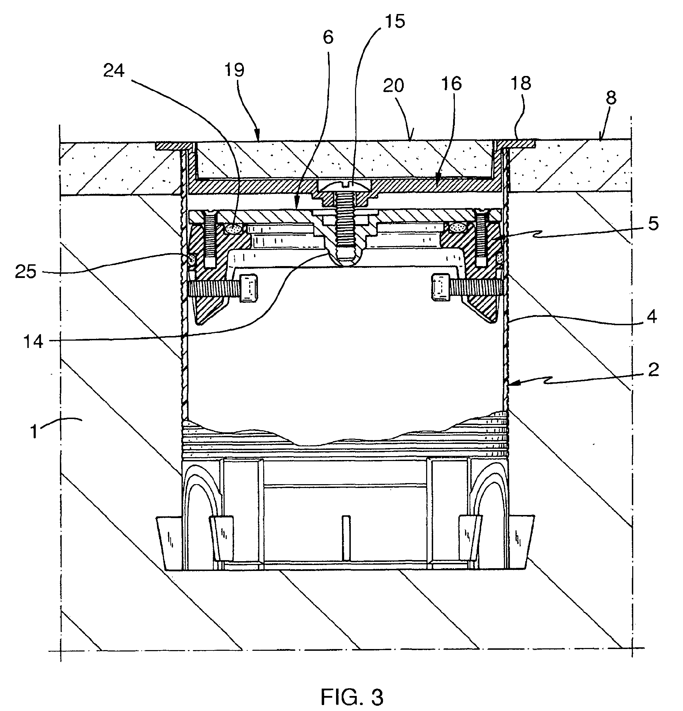

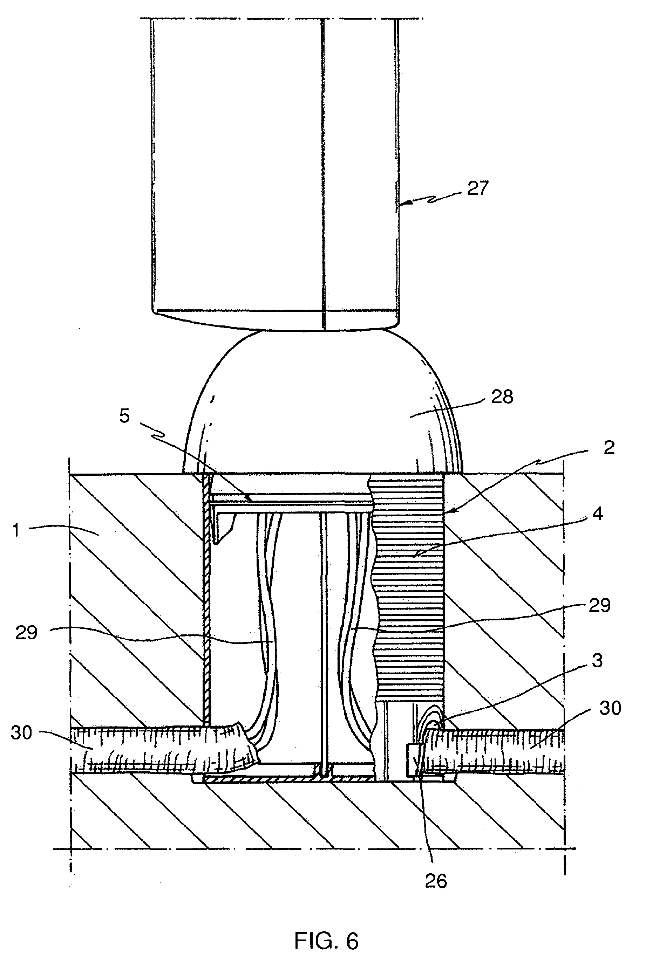

As can be seen in the exploded view in Fig. 1, the floor box described below as a non-limiting example, comprises the following elements:
- a tubular body 2 intended to be embedded in a floor slab (Figs. 2 to 6), which has its bottom and side wall closed and whose top face 13 is open to let any conductor cables 29 to pass (Fig. 6); in its bottom section the tubular body 2 is provided with breakable areas 3 which form input means for receiving a duct 30 carrying conductor cables 29 (Fig. 6), and anchoring projections 26 for anchoring the tubular body in the floor slab 1; in its top section said tubular body 2 has a cylindrical span 4 which, once the floor slab has been made, can be cut at the desired height so that its top face 13 does not project from floor level 8 (Figs. 2 to 6);
- an annular part 5 that fits snugly inside cylindrical span 4 of tubular body 2, so that it can be placed inside it with its top face 9 sunken into it (Figs. 2-3); the tubular part 5 has on its top face 9 a plurality of blind holes 10 distributed in a circumference around its eye 11, intended to receive screws 12 for attaching to the annular part 5 guiding means 28 for guiding some conductor cables 29 towards a connection device 27 arranged on the floor box (Fig. 6), or to attach covering means 6, 7, which will be described later; the tubular part 5 also has on its bottom face legs into which screws 22 screw, with their end pressing against the inner wall of the cylindrical span 4 of tubular body 2, and which are used to secure, by screw fitting, the socket of the annular part 5 to said cylindrical span 4; the annular part 5 is provided with a side watertight seal 25, to provide watertightness between its side wall and the inner wall of cylindrical span 4 of tubular body 2, and a top watertight seal 24 arranged on its top face 9 around its eye 11, to provide a watertight seal of said eye 11 when covering means 6, 7 are applied, as will be seen later;
- covering means 6, 7, made up of a bottom cover 6 and a top cover 7, to cover the floor box at floor level 8 (Figs. 3-4) and to block in an watertight manner the access to cylindrical span 4 of tubular body 2, thereby closing in a watertight manner eye 11 of annular part 5 thanks to the fact that bottom cover 6 is applied against top face 9 of said annular part 5 by pressing on top watertight seal 24.

Bottom cover 6 is a flat circular part comprising in the centre of its top face a threaded, blind hole 14, and on its perimeter three through holes for the passage of screws 12. The diameter of this bottom cover 6 is slightly less than the inner diameter of cylindrical span 4 of tubular body 2, so that said bottom cover can be inserted freely into the latter to be applied against the top face of annular part 5 when the latter is sunken inside said cylindrical span 4, to cover the eye 11 of said annular part 5 and press on top watertight seal 24, thereby forming a watertight perimeter around said eye 11, as can be seen in Fig. 3. Bottom cover 6 is attached to annular part 5 by means of screws 12, which are screwed in some of the blind holes 10 formed in the periphery of annular part 5, thereby applying appropriate force to bottom cover 6 so that it presses on top watertight seal 24.

Top cover 7 is envisaged to be applied on top face 13 of cylindrical span 4 of tubular body 2. It is made up of two bodies: a first body 16 which is attached to bottom cover 6 and a second body 19 that fits removably into first body 16.

First body 16 is a circular part that has on its top face a central sunken area 17 that is cylindrical, surrounded by a peripheral edge 18, and a central through hole for the passage of a screw 15 that screws into threaded blind hole 14 of bottom cover 6, to attach first body 16 to said bottom cover 6. As can be seen in la Fig. 3, in the position of use peripheral edge 18 fits into a recess 23 in the floor, so that it is level with floor level 8. This finish is optional, and recess 23 can be omitted. In such case peripheral edge 18 lies above floor level 8.

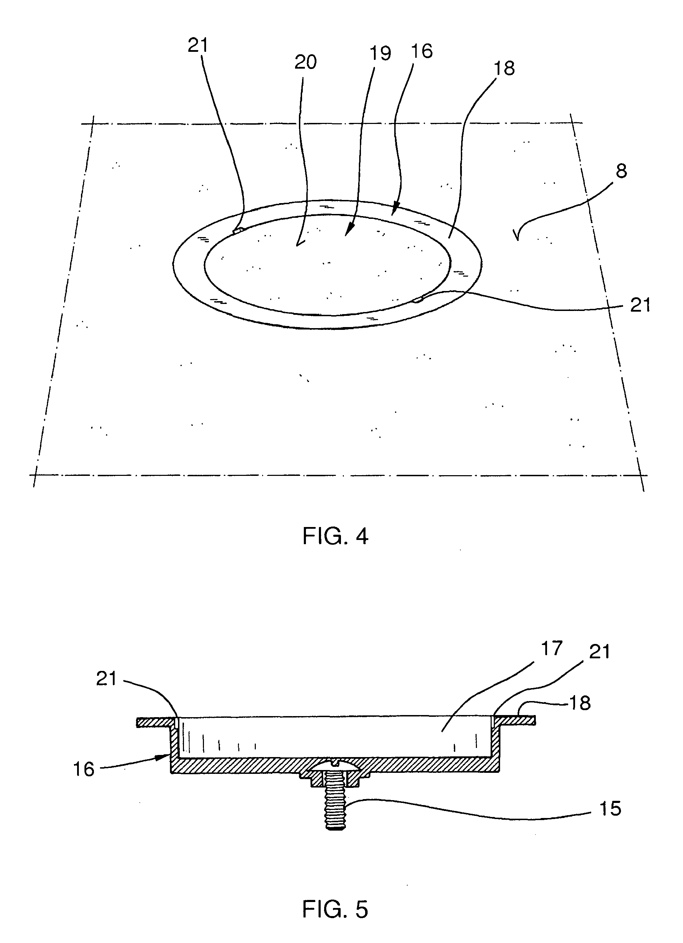

Second body 19 is a circular plate that fits removably in the central sunken area 17 of first body 16, so that its flat top face 20 is level with peripheral edge 18. Therefore, in the position of use shown in Figs. 3 and 4, top face 20 of second body 19 and peripheral edge 18 of first body 16 are level with floor level 8. The plate that forms second body 19 is a plate of floor material that is free of attachment means and which is maintained by its own weight fitted in central sunken area 17 of first body 16. For example, if the floor where the floor box is installed is made up of tiles, for example marble tiles, or a similar material, second body 19 can be made up advantageously of a single block part cut from one of these tiles. Of course, depending on the application, second body 19 can be made up of different materials and can also have multiple layers, comprising for example a top layer of wood, linoleum, carpet, stone, etc. Optionally, second body 19 can be attached removably to body 16, for example by reversible gluing using an adhesive sheet arranged between both bodies.

So that second body 19 can be removed easily from its housing in first body 16, on peripheral edge 18 of the latter, on its inner edge, some notches 21 have been provided suitable for the passage of the head of a flat screwdriver.

In an advantageous variant, shown in Fig. 5, screw 15 that is screwed into threaded blind hole 14 of bottom cover 6 is integral with first body 16, so that it forms therewith an integral unit. By virtue of this, the operation of attaching top cover 7 to bottom cover 6 can be done by turning said top cover 7, without having to remove second body 19 from its housing in first body 16. As well as providing an easier attachment mode for the user, this configuration authorises the possibility that second body 19 is attached to first body 19 in a more definitive way, without the attachment having to be reversible, because it is not necessary to separate both bodies 16, 19 in order to attach top cover 7 to bottom cover 6. This possibility is interesting because there are cases where second body 19 must be attached firmly to first body 16 to avoid breakages. It will be observed that in these embodiments, wherein screw 15 rotates integrally with first body 16, the notches 21 also serve for fitting therein a tool that facilitates unscrewing.

In the embodiment described, tubular body 2, annular part 5 and bottom cover 6 are single parts made of rigid plastic material. First body 16 of top cover 7 is a piece of stainless steel, or alternatively it is a part made up of a rigid plastic material with the exception of peripheral edge 18 which is a noble or decorative material, like for example, stainless steel, wood, etc. Second body 19, as said above, can advantageously be a piece of floor material, such as for example a cut of marble tile, or similar material. It can also be made up of a base of resistant material coated with a layer of wood, carpet, linoleum, etc.

A person skilled in the art will understand that multiple variations are possible with respect to the embodiment described herein, particularly regarding materials and shapes, without departing therefore from the scope of the main claim.

## Claims

1. Floor box, suitable for providing access from above the floor to conductor cables that extend through a floor slab (1), said floor box comprising a tubular body (2) that is suitable for being embedded in the floor slab (1) and which is provided on a lower section thereof with input means (3) for receiving a duct carrying conductor cables, and in a top section thereof a cylindrical span (4) that has its top face open to provide a possible outlet for said conductor cables, said floor box also comprising an annular part (5) that fits inside said cylindrical span (4), forming a watertight perimeter between the side wall of said annular part (5) and the inner wall of said cylindrical span (4), said annular part (5) being provided to receive, where appropriate, guiding means for guiding the conductor cables towards a connection device arranged on said floor box, or covering means (6, 7) to cover said floor box at floor level (8) and block in an watertight manner the access to said cylindrical span (4) via said annular part (5), said annular part (5) comprising on its top face (9) a plurality of blind holes (10) distributed in a circumference around the eye (11) of said annular part (5) and intended to receive screws (12) for attaching to said annular part (5) said guiding means or said covering means (6, 7), said floor box being **characterised in that** said covering means (6, 7) comprise a bottom cover (6) sized so that it is inserted into said cylindrical span (4) and is applied directly on top face (9) of said annular part (5), covering the eye (11) of the latter and forming an watertight perimeter around said eye (11), with said annular part (5) being fitted inside said cylindrical span (4) so that its top face (9) remains sunken in said cylindrical span (4), and a top cover (7), different from said bottom cover (6), which is applied on top face (13) of said cylindrical span (4) to cover said floor box at floor level (8), and attachment means (14, 15) being provided to removably attach said top cover (7) to said bottom cover (6).

2. Floor box according to claim 1, **characterised in that** said top cover (7) is formed by first body (16), which is attached to said bottom cover (6) by said attachment means (14, 15), and which has a central sunken area (17) and a peripheral edge (18), and a second body (19) that fits in said central sunken area (17) of said first body (16) and which is shaped so that its top face (20) is flat and remains substantially level with said peripheral edge (18) of said first body (16) when said second body (19) is fitted in said central sunken area (17) of said first body (16).

3. Floor box according to claim 2, **characterised in that** said second body (19) is made up of a plate of floor material.

4. Floor box according to claim 3, **characterised in that** said plate of floor material forming the second body (19) is free of attachment means and is maintained by its own weight fitted in said central sunken area (17) of said first body (16).

5. Floor box according to claim 3, **characterised in that** said plate of floor material forming the second body (19) is attached to said first body (16).

6. Floor box according to any of the claims 2 to 5, **characterised in that** said attachment means (14, 15), for removably attaching said top cover (7) to said bottom cover (6), consist of a threaded blind hold (14) in the centre of the top face of said bottom cover (6) and a corresponding screw (15) that extends from the bottom face of said first body (16).

7. Floor box according to claim 6, **characterised in that** said corresponding screw (15) that extends from the bottom face of said first body (16) is integral with said first body (16).

8. Floor box according to any of the claims 3 to 7, **characterised in that** said peripheral edge (18) of said first body (16) is provided on its inner edge with notches (21).

## Patentansprüche

1. Bodenkasten, geeignet zum Ermöglichen von Zugriff auf Leiterkabel, die durch eine Bodenplatte (1) verlaufen, von oberhalb des Bodens, wobei der Bodenkasten einen röhrenförmigen Körper (2) umfasst, der dazu geeignet ist, in die Bodenplatte (1) eingebettet zu werden, und der in einem seiner unteren Abschnitte mit einer Einführungseinrichtung (3) zum Empfangen einer Leiterkabel tragenden Führung und in einem seiner Oberabschnitte mit einem zylinderförmigen Bereich (4), dessen Oberseite zum Vorsehen eines möglichen Auslasses für die Leiterkabel offen ist, versehen ist, wobei der Bodenkasten ebenfalls ein ringförmiges Teil (5) umfasst, das in den zylinderförmigen Bereich (4) passt und eine wasserdichte Umfassung zwischen der Seitenwand des ringförmigen Teils (5) und der Innenwand des zylinderförmigen Bereichs (4) bildet, wobei das ringförmige Teil (5) so angeordnet ist, dass es gegebenenfalls eine Führungseinrichtung zum Führen der Leiterkabel zu einem auf dem Bodenkasten angeordneten Verbindungsgerät hin oder eine Abdeckungseinrichtung (6, 7) zum Abdecken des Bodenkastens in Bodenhöhe (8) und Blockieren des Zugriffs auf den zylinderformigen Bereich (4) über das ringförmige Teil (5) auf wasserdichte Weise empfängt, wobei das ringförmige Teil (5) auf seiner Oberseite (9) mehrere Sacklöcher (10) umfasst, die in einem Umfang um das Auge (11) des ringförmigen Teils (5) verteilt sind und dazu vorgesehen sind, Schrauben (12) zum Befestigen der Führungseinrichtung oder der Abdeckungseinrichtung (6, 7) am ringförmigen Teil (5) zu empfangen, wobei der Bodenkasten **dadurch gekennzeichnet ist, dass** die Abdeckungseinrichtung (6, 7) eine Unterabdeckung (6), die so bemessen ist, dass sie in den zylinderförmigen Bereich (4) eingefügt wird und unmittelbar auf die Oberseite (9) des ringförmigen Teils (5) gesetzt wird und das Auge (11) des letzteren bedeckt und eine wasserdichte Umfassung um das Auge (11) herum bildet, wobei das ringförmige Teil (5) in den zylinderförmigen Bereichen (4) eingepasst ist, sodass seine Oberseite (9) im zylinderförmigen Bereich (4) abgesenkt verbleibt, und eine von der Unterabdeckung (6) verschiedene Oberabdeckung (7), die auf die Oberseite (13) des zylinderförmigen Bereichs (4) gesetzt ist, um den Bodenkasten in Bodenhöhe (8) abzudecken, sowie eine Befestigungseinrichtung (14, 15), die dazu vorgesehen ist, die Oberabdeckung (7) abnhembar an der Unterabdeckung (6) zu befestigen, umfasst.

2. Bodenkasten nach Anspruch 1, **gekennzeichnet dadurch, dass** die Oberabdeckung (7) von einem ersten Körper (16), der mittels der Befestigungseinrichtung (14, 15) an der Unterabdeckung (6) befestigt ist und der einen mittleren abgesenkten Bereich (17) und eine Randkante (18) aufweist und einem zweiten Körper (19), der in den mittleren abgesenkten Bereich (17) des ersten Körpers (16) passt und der so geformt ist, dass seine Oberseite (20) flach ist und im Wesentlichen bündig mit der Randkante (18) des ersten Körpers (16) verbleibt, wenn der zweite Körper (19) in den mittleren abgesenkten Bereich (17) des ersten Körpers (16) eingepasst ist, gebildet ist.

3. Bodenkasten nach Anspruch 2, **gekennzeichnet dadurch, dass** der zweite Körper (19) aus einer Platte aus Bodenmaterial hergestellt ist.

4. Bodenkasten nach Anspruch 3, **gekennzeichnet dadurch, dass** die Platte des Bodenmaterials, die den zweiten Körper (19) bildet, frei von Befestigungseinrichtungen ist und durch ihr eigenes Gewicht in den mittleren abgesenkten Bereich (17) des ersten Körpers (16) eingepasst ist.

5. Bodenkasten nach Anspruch 3, **gekennzeichnet dadurch, dass** die Platte des Bodenmaterials, die den zweiten Körper (19) bildet, am ersten Körper (16) befestigt ist.

6. Bodenkasten nach einem der Ansprüche 2 bis 5, **gekennzeichnet dadurch dass** die Befestigungseinrichtung (14, 15) zum abnehmbaren Befestigen der Oberabdeckung an der Unterabdeckung (6) aus einer Sacklochhalterung (14) mit Gewinde in der Mitte der Oberseite der Unterabdeckung (6) und einer entsprechenden Schraube (15), die von der Unterseite des ersten Körpers (16) ausgeht, besteht.

7. Bodenkasten nach Anspruch 6, **gekennzeichnet dadurch, dass** die entsprechende Schraube (15), die von der Unterseite des ersten Körpers (16) ausgeht, einstückig mit dem ersten Körper (16) ausgebildet ist.

8. Bodenkasten nach einem der Ansprüche 3 bis 7, **gekennzeichnet dadurch, dass** die Randkante (18) des ersten Körpers (16) an ihrer Innenkante mit Kerben (21) versehen ist.

## Revendications

1. Caisson de plancher adapté pour permettre l'accès, depuis un niveau situé au-dessus du sol, à des câbles conducteurs qui s'étendent dans une dalle de sol (1), ledit caisson de plancher comprenant un corps tubulaire (2) qui peut être intégré à la dalle de sol (1) et qui est muni, sur une section inférieure de celui-ci, d'un moyen d'entrée (3) destiné à recevoir une gaine qui contient des câbles conducteurs, et, dans une section supérieure de celui-ci, d'un espace cylindrique (4) dont la face supérieure est ouverte afin d'offrir une sortie possible pour lesdits câbles conducteurs, ledit caisson de plancher comprenant également une pièce annulaire (5) qui se place à l'intérieur dudit espace cylindrique (4), en formant un périmètre étanche à l'eau entre la paroi latérale de ladite pièce annulaire (5) et la paroi intérieure dudit espace cylindrique (4), ladite pièce annulaire (5) étant prévue pour recevoir, le cas échéant, un moyen de guidage destiné à guider les câbles conducteurs vers un dispositif de raccordement prévu sur ledit caisson de plancher, ou un moyen de recouvrement (6, 7) destiné à recouvrir ledit caisson de plancher au niveau du sol (8) et à bloquer de manière étanche à l'eau l'accès audit espace cylindrique (4) par le biais de ladite pièce annulaire (5), ladite pièce annulaire (5) comprenant, sur sa face supérieure (9), une pluralité de trous aveugles (10) répartis sur une circonférence autour de l'oeil (11) de la ladite pièce annulaire (5) et destinés à recevoir des vis (12) destinées à fixer sur ladite pièce annulaire (5) ledit moyen de guidage ou ledit moyen de recouvrement (6, 7), ledit caisson de plancher étant **caractérisé en ce que** ledit moyen de recouvrement (6, 7) comprend un capot inférieur (6) dimensionné de façon à être inséré dans ledit espace cylindrique (4) et est appliqué directement sur la face supérieure (9) de ladite pièce annulaire (5), en recouvrant l'oeil (11) de cette dernière et en formant un périmètre étanche à l'eau autour dudit oeil (11), avec ladite pièce annulaire (5) étant placée à l'intérieur dudit espace cylindrique (4) de sorte que sa face supérieure (9) reste enfoncée dans ledit espace cylindrique (4), et un capot supérieur (7), différent dudit capot inférieur (6), qui est appliqué sur la face supérieure (13) dudit espace cylindrique (4) afin de recouvrir ledit caisson de plancher au niveau du sol (8), et un moyen de fixation (14, 15) étant prévu afin de fixer de manière amovible ledit capot supérieur (7) sur ledit capot inférieur (6).

2. Caisson de plancher selon la revendication 1, **caractérisé en ce que** ledit capot supérieur (7) est formé d'un premier corps (16), qui est fixé sur ledit capot inférieur (6) par ledit moyen de fixation (14, 15), et qui possède une zone enfoncée centrale (17) et un bord périphérique (18), et d'un second corps (19) qui se place dans ladite zone enfoncée centrale (17) dudit premier corps (16) et qui est formé de sorte que sa face supérieure (20) soit plate et reste sensiblement de niveau avec ledit bord périphérique (18) dudit premier corps (16) lorsque ledit second corps (19) est placé dans ladite zone enfoncée centrale (17) dudit premier corps (16).

3. Caisson de plancher selon la revendication 2, **caractérisé en ce que** ledit second corps (19) est composé d'une plaque de matériau de sol.

4. Caisson de plancher selon la revendication 3, **caractérisé en ce que** ladite plaque de matériau de sol qui forme le second corps (19) ne possède pas de moyen de fixation et est maintenue par son propre poids dans ladite zone enfoncée centrale (17) dudit premier corps (16).

5. Caisson de plancher selon la revendication 3, **caractérisé en ce que** ladite plaque de matériau de sol qui forme le second corps (19) est fixée sur ledit premier corps (16).

6. Caisson de plancher selon l'une quelconque des revendications 2 à 5, **caractérisé en ce que** ledit moyen de fixation (14, 15), destiné à fixer de manière amovible ledit capot supérieur (7) sur ledit capot inférieur (6), se compose d'un orifice aveugle fileté (14) au centre de la face supérieure dudit capot inférieur (6) et d'une vis correspondante (15) qui s'étend depuis la face inférieure dudit premier corps (16).

7. Caisson de plancher selon la revendication 6, **caractérisé en ce que** ladite vis correspondante (15) qui s'étend depuis la face inférieure dudit premier corps (16) est solidarisée au premier corps (16).

8. Caisson de plancher selon l'une quelconque des revendications 3 à 7, **caractérisé en ce que** ledit bord périphérique (18) dudit premier corps (16) est muni, sur son bord intérieur, d'encoches (21).
